Europäisches Patentamt

European Patent Office

Office européen des brevets

(19)

(11) Numéro de publication: **0 178 983**
**B1**

(12) **FASCICULE DE BREVET EUROPEEN**

(45) Date de publication du fascicule du brevet: **25.04.90**

(51) Int. Cl.⁵: **G 01 S 13/524,** G 01 S 13/528

(21) Numéro de dépôt: **85401897.5**

(22) Date de dépôt: **27.09.85**

(54) **Circuit d'élimination d'échos de mobiles lents pour radar Doppler.**

(30) Priorité: **28.09.84 FR 8414991**

(43) Date de publication de la demande: **23.04.86 Bulletin 86/17**

(45) Mention de la délivrance du brevet: **25.04.90 Bulletin 90/17**

(84) Etats contractants désignés: **DE GB IT NL SE**

(56) Documents cités: **US-A-3 727 224**

(73) Titulaire: **THOMSON-CSF 51, Esplanade du Général de Gaulle F-92800 Puteaux (FR)**

(72) Inventeur: **Lacomme, Philippe THOMSON-CSF SCPI 173, bld Haussmann F-75379 Paris Cedex 08 (FR)**

(74) Mandataire: **Lepercque, Jean et al THOMSON-CSF SCPI F-92045 PARIS LA DEFENSE CEDEX 67 (FR)**

Courier Press, Leamington Spa, England.

EP 0 178 983 B1

## Description

L'invention concerne un circuit d'élimination d'échos de mobiles lents pour radar DOPPLER applicable notamment aux radars aéroportés.

Dans les radars ambigüs en fréquence utilisant l'effet DOPPLER pour éliminer les échos de sol, les échos de véhicules terrestres peuvent se confondre, par repliement de fréquence, avec les échos utilses d'aéronefs. L'objet du circuit de l'invention est d'éliminer ces échos de véhicules terrestres.

Dans les radars non ambigüs en fréquence, l'élimination des échos de véhicules terrestres s'éffectue directement par élimination d'une zone DOPPLER couvrant le spectre des échos de sol et des échos de véhicules terrestres.

Cette zone, déjà importante pour les radars non ambigüs en fréquence, devient prohibitive pour les radars ambigüs en fréquence.

Une solution classique consiste à pister ces échos, c'est-à-dire à effectuer la poursuite de ces échos de tour d'antenne à tour d'antenne, ce qui nécessite des moyens de calcul très importants, compte tenu du nombre très élevé d'échos de véhicules terrestres reçus par un radar en veille, notamment pour un radar aéroporté cherchant à détecter des cibles aériennes volant à basse altitude. D'autre part, ce pistage est rendu difficile par la proximité de ces échos entre eux (routes) et par des nombreux masques naturels rencontrés au niveau du sol.

Le brevet US—A 3 727 224 décrit un système dans lequel on stocke les signaux complets non détectés correspondant à un temps de faisceau d'antenne et pour chaque case distance on teste si les critères d'élimination sont vérifiés ou non. L'invention fournit un circuit agencé différemment dans lequel on prévoit de réaliser la détection sur la totalité du faisceau et qui permet de fournir de meilleures performances.

C'est pourquoi l'invention concerne un circuit permettant d'éliminer les échos de véhicules terrestres pendant un seul balayage (sans corrélation de balayage à balayage) tout en préservant les échos d'aéronefs ambigüs en vitesse. Accessoirement, ce dispositif permet d'éliminer des échos de second (ou nième) balayage.

L'invention concerne donc un circuit d'élimination d'échos de mobiles lents pour radar DOPPLER tel que défini par les revendications 1 à 4.

Les différents objets et caractéristiques de l'invention apparaîtront plus clairement dans la description qui va suivre faite en se référant aux figures annexées qui représentent:
— la figure 1, un exemple de réalisation du circuit de l'invention permettant de faire une discrimination par variations d'amplitude;
— la figure 2, un exemple de réalisation du circuit de l'invention permettant de faire une discrimination par variations de phase et une discrimination par variations d'amplitude.
— la figure 3, un exemple de réalisation d'une variante du circuit de la figure 1.
— la figure 4, un exemple de gabarit de filtre Doppler.

Un des problèmes fondamentaux des radars VCM (visualisation des cibles mobiles) ou MTI (Moving Target Indicator en terminologie anglo-saxonne) aéroportés est l'élimination des véhicules terrestres lents dont la fréquence Doppler se superpose à la fréquence Doppler ambigüe des cibles aériennes rapides et qui ne peuvent donc pas être éliminés par filtrage Doppler.

Les solutions consistant à lever l'ambiguité de vitesse par un procédé type "bipulse" entraînent un accroissement de complexité du matériel considérable au niveau de l'émission et du traitement du signal. Un procédé plus simple consiste à effectuer une corrélation de balayage à balayage de la carte radar: l'écart de positions entre deux balayages successifs est plus important pour les véhicules rapides que pour les véhicules lents d'où une discrimination possible. Toutefois, ceci suppose que ces échos apparaissent régulièrement à chaque balayage, ce qui est rarement le cas pour des échos au niveau du sol (problème de masquage par les arbres, les constructions, le relief, etc. . . .). Cette solution est donc insuffisante et il est nécessaire d'éliminer les échos lents au cours d'un seul passage d'antenne.

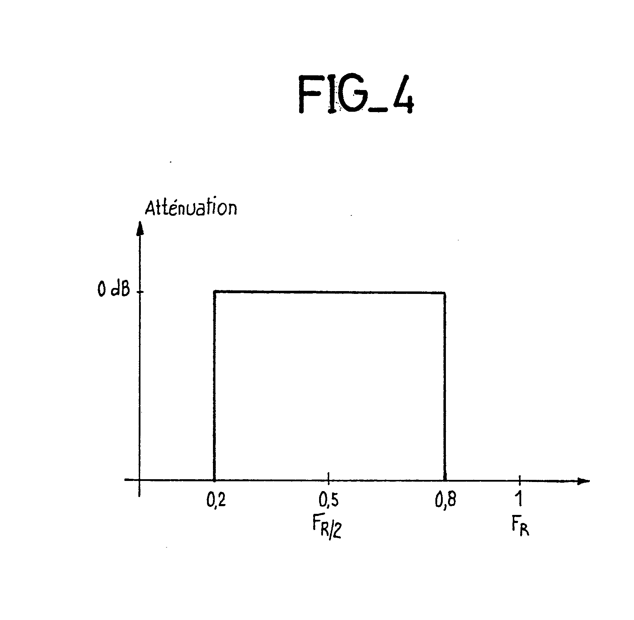

Dans un radar BFR (Basse fréquence de répétition), la fréquence de récurrence relativement basse (par exemple 3000 Hz) implique d'avoir un gabarit de filtre Doppler, tel que représenté en figure 4, dont le rapport entre la zone de réjection et la zone passante est élevé (40%). Pour éviter qu'un nombre important (40%) des cibles voit sa fréquence ambigüe tomber dans la zone aveugle et soit réjecté, on fait varier la fréquence de récurrence $F_R$ pendant le temps d'éclairement de la cible, ce qui déplace les fréquences ambigües et permet la détection de chaque cible aérienne pour au moins une valeur de $F_R$.

Les fréquences Doppler non ambigües étant ramenées autour de la fréquence Doppler des échos de sol, il sera possible de distinguer deux groupes de cibles:
— les cibles dont la fréquence Doppler non ambigüe est inférieure à $F_R$ que ne seront pas perturbées par les variations de $F_R$; ces cibles lentes (vitesses<40 m/s par rapport aux échos de sol) seront présumées être des véhicules terrestres):
— les cibles rapides dont le Doppler non ambigü est supérieur à $F_R$ et dont la fréquence ambigüe dépendra de $F_R$.

Cette discrimination ne sera possible que s'il y a au plus une cible dans chaque cellule de résolution, ce qui est pratiquement le cas après élimination des échos fixes par le filtre Doppler.

Cette discrimination se fait, au cours d'un passage sur la cible:
— par mesures des variations d'amplitude en sortie du filtre Doppler,
— et par mesures des variations de phase pour les différentes fréquences de récurrence.

La discrimination par mesures des variations d'amplitude permet de supprimer environ 90% des véhicules lents, (si leur puissance est au moins 5 dB au-dessus du seuil de détection) avec un risque inférieur à quelques pour cents d'éliminer un cible utile.

La discrimination par mesures des variations de phase permet de supprimer le risque d'une élimination intempestive d'écho utile (pour les échos dont la puissance est au moins 3 dB au-dessus du seuil de détection), tout en améliorant l'élimination des véhicules lents.

Les radars Doppler ambigüs en fréquence (en vitesse) utilisent l'agilité de fréquence de récurrence pendant le temps de passage de l'antenne sur la cible pour supprimer les trous de détection dûs aux vitesses "aveugles" (zones de fréquences correspondant, par repliement, à la zone de réjection du filtre Doppler).

Il s'en suit qu'un écho ambigu en fréquence a une fréquence ambigüe qui peut se trouver dans la zone de réjection du filtre Doppler ou au contraire dans la zone passante du filtre, suivant la valeur de la fréquence de récurrence ($F_R$).

On peut choisir convenablement les N différentes fréquences de récurrence pour qu'un écho ambigu soit dans la bande passante du filtre Doppler pour au moins deux et au maximum N-1 valeurs de la fréquence de récurrence.

Un écho non ambigü se trouve soit dans la zone de réjection, soit dans la zone passante quelle que soit la fréquence de récurrence (donc pour les N valeurs de fréquence).

Un écho de second balayage change de cellules de distance à chaque commutation de $F_R$, il se trouve donc présent, pour une case distance donnée, pour au maximum une valeur de $F_R$.

En éliminant les échos présents pour 1 valeur de $F_R$ ou N valeurs de $F_R$, on élimine les échos non ambigus qui correspondent à la plage de fréquence des véhicules terrestres et les échos de nième balayage.

Ce dispositif est complété par une mesure de la rotation de phase de l'écho de récurrence à récurrence.

Lorque l'écho est non ambigu en fréquence, cette rotation est quasiment indépendante de $F_R$.

Par contre, pour un écho ambigu, cette rotation dépend beaucoup de $F_R$. En comparant cette rotation pour les différentes valeurs de $F_R$, il est possible de discriminer les échos ambigus et les échos non ambigus.

Pratiquement, pour combler les trous de vitesse, nous avons été amenés à choisir par exemple les fréquences de récurrence suivantes:

$$F_1 = 3000 \text{ Hz}$$
$$F_2 = 3200 \text{ Hz}$$
$$F_3 = 3400 \text{ Hz}$$
$$F_4 = 3600 \text{ Hz.}$$

Mais il est bien évident que ces valeurs ne sont fournies qu'à titre d'exemple tout comme les autres valeurs numériques que nous fournissons dans la suite de la description.

Dans un radar Doppler, la fréquence réduite $f_i$ à la fréquence $F_R = F_i$ est obtenue à partir de la fréquence Doppler $f_d$ (mesurée par rapport aux échos de sol) et par la formule:

$$f_i = \text{partie décimale}\left(\frac{f_d}{F_i}\right) = \frac{f_d \text{ modulo } F_i}{F_i}$$

La fréquence ambigüe est alors:

$$f_{di} = f_i \times F_i$$

Un écho à la fréquence $f_d$ sera vu pour les fréquences de récurrence telles que $f_i$ soit dans la zone passante du filtre, nous dirons alors que le nombre $a_i$ vaut 1 (et zéro dans le cas contraire).

Pour chaque fréquence, on peut calculer les nombres $a_1, a_2, a_3, a_4$ qui indiquent les fréquences de récurrence où il y aura détection possible.

On sait établir une relation entre $f_d$ et les $a_i$ pour les cibles utiles, c'est-à-dire pratiquement jusqu'à 750 m/s ou Mach 2,5 en basse altitude:

$$(0 < f_d < 47,5 \text{ KHz}).$$

Cette vitesse est la vitesse de la cible par rapport au sol, la vitesse du porteur est éliminée par une boucle de vitesse sol.

On constate que:

—tous les trous de vitesse, supérieurs à $F_R$, sont comblés (au moins 1 $a_i$ non nul) sauf les zones suivantes:

| | |
|---|---|
| 2880 à 3600 Hz | soit 720 Hz |
| 6480 à 600 Hz | soit 120 Hz |
| 474400 à 47520 Hz | soit 120 Hz |

Toutefois, les flancs du filtre Doppler n'étant pas raides, les trous que l'on constate non partiellement comblés; il n'a pas été jugé utile de rajouter une 5ème fréquence pour compler les zones aveugles résiduelles.

Les zones pour lesquelles tous les $a_i$ sont à 1 se trouvent principalement concentrées aux fréquences basses. En particulier, les véhicules terrestres tels que $f_d < 2400$ Hz, correspondent à:

— tous les $a_i = 0$ de 0 à 600 Hz
— tous les $a_i = 1$ de 720 à 2400 Hz.

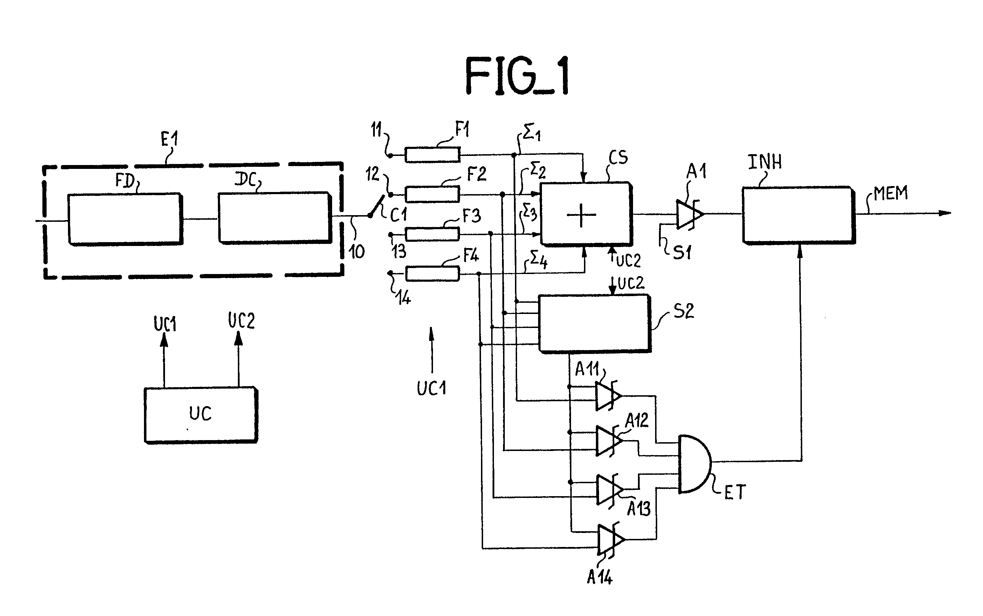

La figure 1 représente un circuit de discrimination par mesures des variations d'amplitude.

Sur cette figure, on trouve des circuits E1 de réception d'antenne comprenant notamment un filtre Doppler FD et un circuit de détection d'enveloppe et de normalisation destiné à réguler la fausse alarme. Ce détecteur fournit sur une liaison de sortie 10 des valeurs de niveaux de signaux sous forme de signaux numériques. Un commutateur dont l'entrée est connectée à la liaison 10, permet de connecter celle-ci à une sortie 11 à 14 correspondant chacune à une fréquence de récurrence. A chacune de ces sorties est connecté un registre sommateur dont la longueur est celle du nombre de quanta distance fonctionnant en mode série. Ces registres sont commandés par un circuit de commande central UC et plus précisément par des signaux UC1 correspondant aux quanta distances.

Les sorties des registres F1 à F4 sont connectées aux entrées d'un circuit de sommation CS qui effectue l'addition des informations reçues sur ses entrées et fournit un résultat à un circuit à seuil A1. Celui-ci reçoit par ailleurs un signal de seuil S1 d'une valeur déterminée. Le circuit à seuil A1 (ou comparateur) retransmet, vers un circuit d'inhibition INH, les signaux reçus du circuit de sommation CS, si leur valeur est supérieure à la valeur du signal de seuil S1.

Par ailleurs, le circuit de la figure 1 comporte un circuit d'élaboration de niveau de seuil S2 connecté aux sorties des registres F1 à F4. Ce circuit détecte la valeur du signal fournit par F1 à F4 ayant la plus forte valeur. A partir de cette valeur, il fabrique un signal de niveau de seuil (S2) dont la valeur est inférieure d'une valeur connue, 6 dB par exemple, à celle détectée.

Quatre circuits à seuil A11 à A14, tels que des comparateurs, sont connectés aux sorties des registres F1 à F4. Ils reçoivent chacun le signal de niveau de seuil (S2) et retransmettent sur les entrées d'une porte ET, un signal de niveau logique "1", lorsque la valeur du signal reçu du registre F1 à F4 est supérieure à la valeur du signal de niveau seuil (S2). Dans le cas contraire, les circuits à seuil A11 à A14 fournissent un signal de niveau logique "0". Lorsque toutes les entrées de la porte ET sont au niveau logique "1", cette porte fournit un signal d'inhibition au circuit d'inhibition INH.

Si la porte ET fournit un signal de niveau logique "0", le circuit d'inhibition autorise la transmission des signaux reçus du circuit à seuil A1, sur la liaison MEM, vers des circuits d'utilisation.

Par contre, si la porte ET fournit un signal de niveau logique "1", le circuit d'inhibition interdit cette retransmission de signaux sur la liaison MEM.

Dans ces conditions, on prend comme hypothèse de base que la puissance d'une cible est constante pendant le temps de passage T d'un faisceau radar sur la cible.

A titre d'exemple pratique, on suppose que durant le temps d'illumination T (environ 80 ms), la fréquence de récurrence est commutée quatre fois soit tous les T/4 secondes (ou toutés les N/4 récurrences où N est le nombre de récurrences par plot).

Les circuits classiques effectuent, après filtrage Doppler, détection normalisation, une post intégration adaptée au temps de passage T.

Selon l'invention, la postintégration est remplacée par 4 postintégrations successives de N/4 récurrences, chaque registre de sommation F1 à F4 étant affecté à une fréquence de récurrence particulière. Les résultats de ces quatre sommations élémentaires sont, d'une part, sommés dans le circuit CS afin de réaliser l'équivalent de la postintégration globale sur le temps T et le résultat est présenté au seuil $S_1$ de détection. D'autre part, chaque sortie des registres de sommation est comparée à un seuil $S_2$ permettant d'élaborer les $a_i$.

Lorsque tous les $a_i$ sont à l'écho est inhibé.

En raison des pointes transitoires dues à la commutation de la fréquence de récurrence FR, le seuil $S_2$ doit être asservi au niveau de l'écho: on détecte donc le plus fort des 4 niveaux et on place le seuil à 6 dB sous cette valeur, avec un talon $S_{02}$ lorsque l'écho est faible.

Dans ces conditions, le gabarit équivalent du filtre est celui correspondant à −6 db.

Pour les échos faibles (proches du seuil de détection), le seuil $S_2$ calculé précédemment se trouverait sous le bruit thermique. On place donc une butée basse à l'évolution de $S_2$. La valeur de cette butée doit être telle qu'elle minimise la probabilité d'erreurs.

Deux types d'erreurs peuvent être faites:

1°/Elimination erronée d'une cible utile due à une fausse alarme entraînant le passage à 1 d'un $a_i$ qui serait à zéro sans bruit thermique. Cette probabilité d'erreur est maintenue inférieure à quelques pour cents.

2°/Non élimination d'une cible lente due à une non détection entraînant le maintien à zéro d'un $a_i$ qui aurait dû être à 1.

Le seuil $S_2$ étant fixé par le critère précédent, on a calculé la probabilité de non élimination d'une cible lente en fonction de la puissance de cet écho rapportée à la puissance minimale de détection.

On constate que pour les échos dont le rapport signal à bruit est supérieur à 4 dB, l'élimination est meilleure que 90%.

Ces probabilités sont calculées à partir de la puissance instantanée en un passage. Les probabilités globales devraient tenir compte de la fluctuation de puissance d'un balayage au suivant.

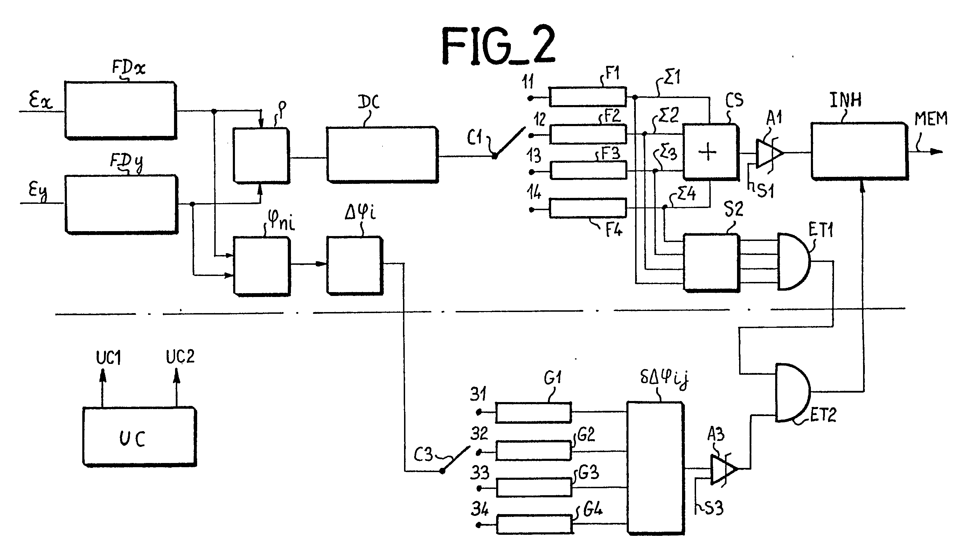

Pour améliorer les performances du système de l'invention, un circuit de discrimination par variations de phase est combiné au circuit de discrimination par variations d'amplitude comme cela est représenté en figure 2. Ce circuit est conçu de façon analogue au circuit de discrimination par variations d'amplitude.

Appelons $\Delta\phi_i=\phi_{ni}-\phi_{ni-1}$ la différence de phase du signal reçu entre les récurrences n et n−1, la fréquence de récurrence étant $F_i$.

Nous avons

$$\Delta\phi_i=\frac{2\pi f}{F_i}d$$

où $f_d$ est la fréquence Doppler de la cible non ambigüe.

Pour $F_R=F_j$, nous avons de même:

$$\Delta\phi_j=\frac{2\pi f}{F_j}d$$

soit

$$\delta\Delta\phi_{ij}=\Delta\phi_i-\Delta\phi_j=2\pi f_d\left(\frac{1}{F_i}-\frac{1}{F_j}\right)$$

la différence entre les écarts de phases mesurés aux fréquences $F_i$ et $F_j$.

On constate que le maximum des $\delta\Delta\phi_{ij}$, permet de discriminer, sans aucune ambiguité, les échos dont le Doppler est inférieur à 3000 Hz (échos lents) des échos dont le Doppler est supérieur à 3000 Hz en plaçant un seuil à environ $\pi/3$.

Toutefois, cette discrimination ne sera possible que si on peut calculer les $\delta\Delta\phi_{ij}$, ce qui suppose qu'il n'y ait qu'un écho par cellule de résolution du radar: il faut donc se placer derrière le filtre Doppler pour éliminer d'abord les échos de sol. Dans ces conditions, les $\delta\Delta\phi_{ij}$ ne pourront être calculées que si on a $a_i$ et $a_j=1$.

Ceci limite la portée du dispositif, aux zones dans lesquelles le calcul est possible.

Toutefois, le circuit de discrimination par variation de phase joint au circuit de discrimination par variation d'amplitude permet de lever le doute sur les zones où tous les $a_i$ sont à 1 et donc de supprimer certains trous de vitesses créés lors de l'élimination des cibles lentes.

En plaçant un seuil à 67°, on dispose d'une garde de 20° pour le calcul du maximum de $\delta\Delta\phi_{14}$. Par le calcul on démontre que la précision exigée est obtenue dès que le rapport signal sur bruit (S/B) est supérieur à 3 dB.

Comme il a été dit précédemment, la fonction discrimination par la phase est un perfectionnement au dispositif de la figure 1 et nécessite donc les circuits correspondants.

Un tel dispositif suppose de plus que l'on puisse calculer la phase du signal, après filtre Doppler, dans chaque quantum de distance. Il est donc nécessaire de disposer de deux filtres Doppler (un sur chaque composante du signal) et un extracteur de phase.

Moyennant ces conditions, le circuit de discrimination par variations de phase, comme représenté sur la figure 2, comporte:

— deux filtres Doppler $FD_x$ et $FD_y$ pour les deux composantes $\varepsilon_x$ et $\varepsilon_y$ de signal;

— deux circuits de calcul de phases $\phi_{ni}$ et $\Delta\phi_i$ connectés aux deux filtres Doppler $FD_x$ et $FD_y$;

— un commutateur $C_3$ dont l'entrée est connectée au circuit $\Delta\phi_i$ et permettant de connecter cette entrée à l'une de ses parties 31 à 34;

— les registres de sommation (G1 à G4) des phases $\Delta\phi_i$ connectés aux sorties 31 à 34 du commutateur C3;

— un circuit de recherche du maximum de variation de phase $\delta\Delta\phi_{ij}$ connecté aux sorties des registres de sommation et fournissant la valeur de ce maximum sur une sortie;

— un circuit à seuil connecté à la sortie du circuit $\delta\Delta\phi_{ij}$ précédent, comparant la valeur du signal présent sur cette sortie à un seuil S3 et fournissant un signal d'inhibition lorsque la valeur du signal est inférieure au seuil S3. La valeur de seuil peut être selon l'exemple pris précédemment de 67°;

— une porte à coïncidence ET2 dont une première entrée est connectée à la sortie du circuit à seuil précédent et la deuxième entrée est connectée à la sortie d'une porte ET1 correspondant à la porte ET du circuit de la figure 1.

On retrouve sur la figure 2, le circuit de discrimination par variations d'amplitudes de la figure 1. Les résultats des discriminations par variations d'amplitudes et de phases sont réunis par la porte ET2 qui fournit un signal d'inhibition au circuit de sortie INH si un mobile lent est détecté dans les conditions décrites précédemment.

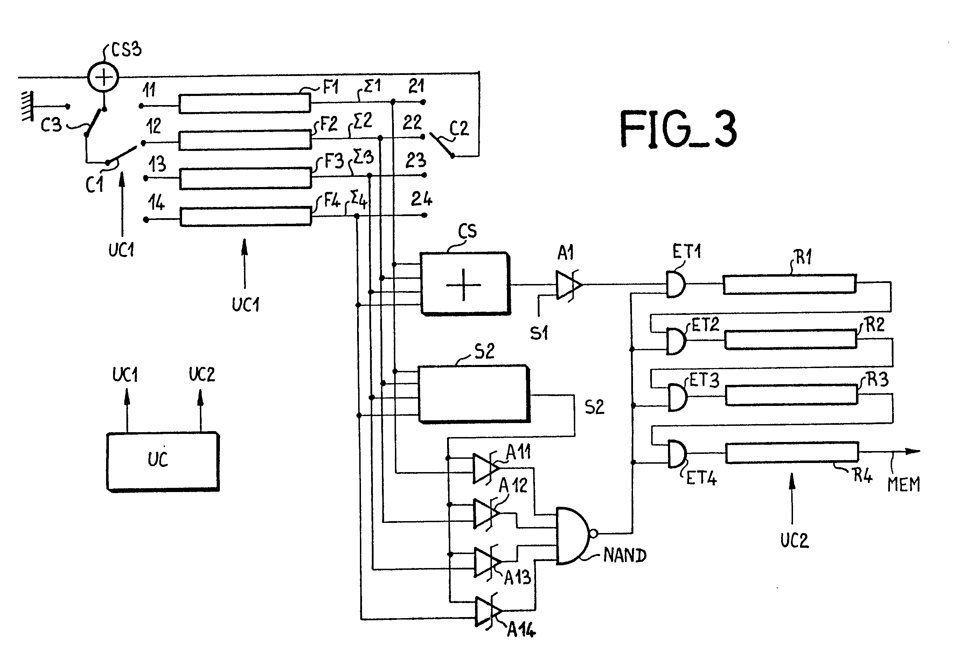

En se reportant à la figure 3, on va maintenant décrire une variante d'un exemple de réalisation du circuit de discrimination par variations d'amplitudes de l'invention.

Ces circuits se décomposant en deux groupes:

— un groupe qui fonctionne à la cadence du quantum distance et pour chaque récurrence sous la commande de signaux UC1 fournit par l'unité de commande UC.

— un groupe qui ne fonctionne qu'à la récurrence correspondant à un changement de fréquence, sous la commande de signaux UC2 fournis par l'unité de commande UC.

Le premier groupe de circuits comprend principalement 4 registres à décalage F1 à F4 de n cases et p bits où n est le nombre de cases distances du domaine (limité par exemple à 254) et p le nombre de bits nécessaires pour effectuer l'intégration de la sortie du détecteur d'enveloppe sur 20 récurrences représentant le quart du temps de passage du faisceau sur la cible.

Deux multiplexeurs ou commutateurs $C_1$ et $C_2$ branchent l'entrée et la sortie d'un registre (F1 à F4) sur un sommateur CS3 pendant les récurrences pour lesquelles $F_R=F_i$. Pour la première récurrence du cycle $F_R=F_i$, l'entrée est mise à zéro par $I_3$, ce qui vide le contenu du registre (i). Ensuite les informations incidentes sont sommées dans ce registre, jusqu'à ce que $F_R=F_i+1$ (modulo 4). A cet instant, les informations des 4 registres, correspondant aux quatre dernières séquences $F_{i-3}$, $F_{i-2}$, $F_{i-1}$, $F_i$, sont transférées dans le deuxième groupe de circuits (en même temps que le registre

$$(i+1)=(i-3)$$

est remis à zéro).

Ce deuxième groupe de circuits est constitué essentiellement par les circuits connectés en sortie des registres F1 à F4.

Les informations que l'on appellera $\Sigma_{i-3}$, $\Sigma_{i-2}$, $\Sigma_{i-1}$, $\Sigma_i$, fournies par les registres F1 à F4 sont combinées dans un circuit représenté par un circuit de sommation CS1.

Pour la compréhension du présent dispositif, on considère qu'il s'agit d'une somme, adaptant la postintégration au temps de passage sur la cible. Ensuite, les informations ainsi sommées sont comparées à un seuil $S_1$ (circuit A1) fixé par les conditions désirées de fausse alarme et le résultat est mémorisé, après passage dans une porte, dans un registre à décalage R1 de n cases de 1 bit.

Trois autres registres identiques R2 à R4, placés en série, maintiennent en mémoire les 3 derniers trains d'information correspondant aux séquences:

$$i-1,\ i-2,\ i-3,\ i-4 \quad (F_{i-1},\ F_{i-2},\ F_{i-3},\ F_i)$$
$$i-2,\ i-3,\ i-4,\ i-5 \quad (F_{i-2},\ F_{i-3},\ F_i,\ F_{i-1})$$
$$i-3,\ i-4,\ i-5,\ i-6 \quad (F_{i-3},\ F_i,\ F_{i-1},\ F_{i-2})$$

Les informations $\Sigma_i$, $\Sigma_{i-1}$, $\Sigma_{i-2}$, $\Sigma_{i-3}$ sont d'autre part orientées vers le circuit élaborant le seuil $S_2$.

Ce circuit prend le maximum des $\Sigma j$ (soit $\Sigma p$), le divise par 2 (6 dB soit un décalage de 1 bit) et la valeur $\Sigma p/2$ est comparée au seuil $S_2$. Si $\Sigma p/2 > S_{O2}$ alors $S_2 = \Sigma p/2$, sinon $S_2 = S_{O2}$.

Les $\Sigma j$ sont comparés à $S_2$ dans les circuits A11 à A14, pour fournir les $a_j$ dont le produit logique, inversé par une porte NAND, commande la circulation des informations dans les registres précédents. Lorsque tous les $a_j$ sont à 1, toute l'information correspondant à cette cible (qui est présente dans les séquences, i, i−1, i−2, i−3) est effacée.

Sinon, l'information se retrouve à 1 sortie du 4ème registre avec un retard correspondant à une largeur de faisceau.

Il est à remarquer qu'en cas de présence d'une cible lente, les séquences i−4, i−5, i−6 correspondant à 3/4 de faisceau supplémentaire sont également effacées, et l'on verra alors une "ombre" à côté des échos de véhicules.

## Revendications

1. Circuit d'élimination d'échos de mobiles lents pour radar Doppler possédant un nombre déterminé de fréquences de récurrence différentes et un temps de passage déterminé du faisceau d'antenne sur une cible, lequel radar comprend des circuits de réception (E1) d'antenne, ledit circuit d'élimination comprenant:

— au moins deux filtres Doppler ($FS_x$, $FD_y$) arrangés pour être connectés au circuits de réception et donnant les valeurs de deux composantes en quadrature d'un signal détecté, ces filtres Doppler étant suivis d'un détecteur d'enveloppe (DC) fournissant sur une liaison de sortie (10) la valeur numérique du signal détecté;

— un premier commutateur (C1) possédant une entrée connectée à la liaison (10) du détecteur d'enveloppe (DC) et un nombre de sorties (11 à 14) égal au nombre de fréquences de récurrence différentes du radar Doppler, ledit commutateur (C1) permettant de connecter son entrée à la sortie (11 à 14) correspondant à la fréquence de récurrence en cours;

— des registres de sommation (F1 à F4) fonctionnant en mode série, connectés aux sorties (11 à 14), chaque registre de sommation ayant une longueur égale à celle du nombre de quanta distances du radar, et possédant une sortie sur laquelle il fournit une valeur de signal sommé;

— un circuit de sommation (CS) connecté à chaque sortie des registres de sommation (F1 à F4) effectuant une post-intégration, sur le temps de passage du faisceau d'antenne sur la cible, des signaux détectés pour fournir sur une sortie un signal d'intégration, cette sortie étant connectée à la première entrée du circuit de sortie (INH);

— un circuit de coïncidence (ET, ET1) possédant autant d'entrées qu'il y a de valeurs de la fréquence de récurrence, chacune de ces entrées étant connectée à la sortie d'un desdits registres de sommation (F1 à F4), de telle sorte que le dit circuit de coïncidence (ET1) fournisse un premier signal d'inhibition sur une sortie d'inhibition lorsque chaque registre de sommation délivre un signal de niveau supérieur à un seuil déterminé (S2);

— un circuit de sortie (INH) possédant au moins une première entrée connectée à la sortie du circuit de sommation (CS), et une deuxième entrée connectée à la sortie d'inhibition d'une porte logique de type ET (ET2), ce circuit de sortie (INH) permettant, en l'absence de signal sur sa deuxième entrée, de retransmettre tout signal reçu sur la première entrée, sur une sortie vers des circuits d'affichage, ce circuit (INH) permettant également d'interdire la retransmission de tout signal provenant des registres de sommation (F1 à F4) en cas de présence d'un signal sur sa deuxième entrée:

— un circuit de commande (UC) fournissant des signaux de commande au commutateur (C1), et aux registres de sommation (F1 à F4);

— des dispositifs de mesure des différences de phase ($\phi_{ni}$, $\Delta\phi_{ni}$) du signal détecté entre deux récurrences, connectés aux deux filtres Doppler ($FD_x$, $FD_y$) et fournissant à l'entrée d'un deuxième commutateur (C3) un signal numérique de valeur desdites différences de phase, ledit commutateur (C3) possédant autant de sorties (31 à 34) qu'il y a de valeurs de la fréquence de récurrence, chacune de ces sorties étant connectée à un registre de sommation (G1 à G4) desdites différences de phase, les sorties des dits registres de sommation (G1 à G4) étant par ailleurs connectées à un circuit de recherche de maximum de variation de phase ($\delta\Delta\phi_{ij}$) dont la sortie est connectée à un circuit de seuil (A3) fournissant sur sa sortie un second signal d'inhibition lorsque la valeur du signal en sortie dudit circuit de recherche de maximum est inférieure à une valeur déterminée, ladite sortie de ce circuit à seuil (A3) étant connectée à une première entrée de ladite porte logique du type ET (ET2) dont une seconde entrée est connectée à la sortie d'inhibition du circuit de coïncidence (ET1) fournissant le premier signal d'inhibition.

2. Circuit d'élimination d'échos mobiles lents pour radar Doppler, selon la revendication 1, caractérisé en ce qu'il comporte un troisième commutateur (C2) possédant autant d'entrées (21 à 24) qu'il y a de valeurs de la fréquence de récurrence, connectées chacune à une sortie d'un registre de sommation (F1 à F4), ainsi qu'une sortie conectée à une première entrée d'un circuit addition (CS3), lequel possède une deuxième entrée connectée à la sortie du détecteur d'enveloppe (DC) et une sortie, l'entrée du premier commutateur (C1) étant alors connectée à la sortie dudit circuit d'addition (CS3).

3. Circuit d'élimination d'échos mobiles lents pour radar Doppler selon la revendication 1, caractérisé en ce que chaque sortie de registre de sommation (F1 à F4) est connectée au circuit de coïncidence (ET) par l'intermédiaire d'un circuit à seuil (A11 à A14).

4. Circuit d'élimination d'échos mobiles lents pour radar Doppler selon la revendication 3, caractérisé en ce qu'il comporte un circuit d'élaboration de niveau de seuil (S2) connectée par ses entrées à chaque sortie des registres de sommation (F1 à F4) et fournissant, sur une sortie connectée aux circuits à seuil (A11 à A14), un signal de seuil dont le niveau est déterminé à partir du signal ayant le niveau maximum sur ses entrées.

## Patentansprüche

1. Schaltung zur Unterdrückung von langsamen mobilen Echos für ein Doppler-Radar, das eine bestimmte Anzahl von verschiedenen Folgefrequenzen aufweist und mit einer bestimmten Zielüberstreichungszeit für das Antennenbündel arbeitet, wobei das Radar Antennen-Empfangsschaltungen (E1) aufweist und die Unterdrückungsschaltung umfaßt:

— wenigstens zwei Dopplerfilter ($FS_x$, $FD_y$), die für die Verbindung mit der Empfangsschaltung angeordnet sind und die Werte von zwei um 90° gegeneinander phasenvorschobenen Komponenten eines erfaßten Signals abgeben, wobei auf diese Dopplerfilter ein Hüllkurvendetektor (DC) folgt, der auf einer Ausgangsverbindung (10) den numerischen Wert des erfaßten Signals ausgibt;

— einen ersten Umschalter (C1), der einen mit der Verbindung (10) des Hüllkurvendetektors (DC) verbundenen Eingang und eine Anzahl von Ausgängen (11 bis 14) aufweist, die gleich der Anzahl von verschiedenen Folgefrequenzen des Doppler-Radars ist, wobei dieser Umschalter (C1) es ermöglicht, seinen Eingang mit demjenigen Ausgang (11 bis 14) zu verbinden, welcher der laufenden Folgefrequenz entspricht;

— Summierregister (F1 bis F4), die seriell betrieben werden und mit den Ausgängen (11 bis 14) verbunden sind, wobei jedes Summierregister eine Länge aufweist, die gleich der Anzahl von Entfernungsquanten des Radars ist, und einen Ausgang aufweist, auf dem es einen summierten Signalwert ausgibt;

— eine Summierschaltung (CS), die mit jedem Ausgang der Summierregister (F1 bis F4) verbunden ist und eine Nachintegration der erfaßten Signale über die Zielüberstreichungszeit des Antennenbündels durchführt, um auf einem Ausgang ein Integrationssignal zu liefern, wobei dieser Ausgang mit dem ersten Eingang der Ausgangsschaltung (INH) verbunden ist;

— eine Koinzindenzschaltung (ET, ET1), die ebenso viele Eingänge aufweist wie Folgefrequenzwerte vorhanden sind, wobei jeder dieser Eingänge mit dem Ausgang eines der Summierregister (F1 bis F4) verbunden ist, so daß die Koinzidenzschaltung (ET1) ein erstes Sperrsignal auf einem Sperrausgang ausgibt, wenn jedes Summierregister ein Signal mit einem Pegel ausgibt, welches einen vorbestimmten Schwellwert (S2) überschreitet;

— eine Ausgangsschaltung (INH), die wenigstens einen ersten Eingang aufweist, der mit dem Ausgang der Summierschaltung (CS) verbunden ist, und einen zweiten Eingang aufweist, der mit dem Sperrausgang einer logischen AND-Torschaltung (ET2) verbunden ist, wobei diese Ausgangsschaltung (INH) bei Abwesenheit eines Signals an ihrem zweiten Eingang es ermöglicht, jegliches am ersten Eingang empfangene Signal zu einem Ausgang für Anzeigeschaltungen durchzustellen, wobei diese Schaltung (INH) es ferner ermöglicht, die Durchstellung jeglichen Signals aus den Summierregistern (F1 bis F4) zu verbindern, wenn ein Signal an ihrem zweiten Eingang vorhanden ist;

— eine Steuerschaltung (UC), die Steuersignale an den Umschalter (T1) und an die Summierregister (F1 bis F4) abgibt;

— Meßvorrichtungen zur Messung der Phasendifferenzen ($\varphi_{ni}$, $\Delta\varphi_{ni}$) des zwischen zwei Folgeperioden erfaßten Signals, wobei diese Vorrichtungen an zwei Dopplerfilter ($FD_x$, $FD_y$) angeschlossen sind und an den Eingang eines zweiten Umschalters (C3) ein numerisches Signal abgeben, dessen Wert der der Phasendifferenzen ist, wobei der Umschalter (C3) ebenso viele Ausgänge (31 bis 34) aufweist wie Folgefrequenzwerte vorhanden sind, wobei ferner jeder dieser Ausgänge an ein Summierregister (G1 bis G4) für diese Phasendifferenzen angeschlossen ist und die Ausgänge der Summierregister (G1 bis G4) ferner an eine Schaltung zum Aufsuchen eines (Maximums der Phasenveränderung ($\delta\Delta\varphi_{ij}$) angeschlossen sind, deren Ausgang mit einer Schwellwertschaltung (A3) verbunden ist, die an ihrem Ausgang ein zweites Sperrsignal abgibt, wenn der Wert des Signals am Ausgang der Schaltung zum Aufsuchen des Maximums kleiner als ein bestimmter Wert ist, und wobei der Ausgang dieser Schwellwertschaltung (A3) mit einem ersten Eingang der logischen AND-Torschaltung (ET2) verbunden ist, wovon ein zweiter Eingang mit dem Sperrausgang der Koinzidenzschaltung (ET1) verbunden ist und das erste Sperrsignal abgibt.

2. Schaltung zur Unterdrückung von langsamen mobilen Echos für ein Doppler-Radar, nach Anspruch 1, dadurch gekennzeichnet, daß sie einen dritten Umschalter (C3) aufweist, der ebenso viele Eingänge (21 bis 24) aufweist wie Folgefrequenzwerte vorhanden sind, die jeweils an einen Ausgang eines Summierregisters (F1 bis F4) angeschlossen sind, und einen Ausgang aufweist, der an einen ersten Eingang einer Addierschaltung (CS3) angeschlossen ist, welcher einen zweiten Eingang aufweist, der mit dem Ausgang des Hüllkurvendetektors (DC) verbunden ist, und einen Ausgang, wobei der Eingang des ersten Umschalters (C1) mit dem Ausgang der Addierschaltung (CS3) verbunden ist.

3. Schaltung zur Unterdrückung von langsamen mobilen Echos für ein Doppler-Radar, nach Anspruch 1, dadurch gekennzeichnet, daß jeder Ausgang der Summierregister (F1 bis F4) mit der Koinzidenzschaltung (ET) über eine Schwellwertschaltung (A11 bis A14) verbunden ist.

4. Schaltung zur Unterdrückung von langsamen mobilen Echos für ein Doppler-Radar, nach Anspruch 3, dadurch gekennzeichnet, daß sie eine Schwellwerterzeugungsschaltung (S2) aufweist, die an ihren Eingängen mit jedem Ausgang der Summierregister (F1 bis F4) verbunden ist und auf einem Ausgang, der mit den Schwellwertschaltungen (A11 bis A14) verbunden ist, ein Schwellwertsignal abgibt, dessen Pegel aus dem Signal bestimmt wird, welches an seinen Eingängen den maximalen Pegel aufweist.

## Claims

1. An elimination circuit for slow mobile echoes in a doppler radar system possessing a predetermined number of different recurrent frequencies and a predetermined passage time of the antenna beam to a target, said radar system comprising antenna receiving circuits (E1), said elimination circuit comprising

— at least two doppler filters ($FS_x$ and $FD_y$) arranged to be connected with the receiving circuit, providing the values of two quadrature components of a detected signal, said doppler filters being followed by an envelope detector (DC) supplying, at an output connection (10), the digital value of the detected signal;

— a first switch (C1) possessing an input connected with the connection (10) of the envelope detector (DC) and a plurality of outputs (11 through 14) equal to the number of the different recurrent frequencies of the doppler radar system, said switch (C1) making it possible to connect its input with the output (11 through 14) corresponding to the instant recurrent frequency;

— summating registers (F1 through F4) functioning in a serial mode, connected with the outputs (11 through 14), each summating register having a length equal to that of the number of quanta distances of the radar system, and possessing an output at which it furnishes a value of the summating signal;

— a summating circuit (CS) connected at each output of the summating registers (F1 through F4) effecting a post-integration, during the passage time of the antenna beam to the target, of the detected signals in order to furnish an integration signal at one output, said output being connected with the first input of this output circuit (INH);

— a coincidence circuit (ET and ET1) possessing as many inputs as there are recurrent frequency values, each of these inputs being connected with the output of one of the said summating registers (F1 through F4) in such a manner that the said coincidence circuit (ET1) furnishes a first incubation signal at an inhibition output when each summating register delivers a signal with a level above a predetermined threshold (S2);

— an output circuit (INH) possessing at least one first input connected with the output of the summating circuit (CS) and a second input connected with the inhibition output of a logical gate of the AND type (ET2), said output circuit (INH) permitting, in the absence of a signal at its second input, the retransmission of every received signal at the second input, at one output to the display circuits, said circuit (INH) also permitting the disenablement of retransmission of any signal coming from the summating registers (F1 through F4) in the event of a signal being present at its second input;

— a control circuit (UC) furnishing signals to the switch (C1) and to the summating registers (F1 through F4);

— devices for measuring the phase differences ($\phi_{ni}$ and $\Delta\phi_i$) of the detected signal between two recurrences, connected to the two doppler filters ($FD_x$ and $FD_y$) and furnishing at the input of a second switch (C3) a digital signal with the value of the said phase differences, the said switch (C3) possessing as many outputs (31 through 34) as there are values of the frequency of recurrence, each of the outputs being connected with a summating register (G1 through G4) of the said difference in phase, the outputs of the said summating registers (G1 through G4) furthermore being connected with a maximum phase variation seek circuit ($\delta\Delta\phi_{ij}$) whose output is connected with a threshold circuit (A3) furnishing at its output a second inhibition signal when the value of the signal at the output of the said maximum seek circuit is below a predetermined value, the said output of this threshold circuit (A3) being connected with a first input of the said logical gate of the AND type (ET2) of which a second input is connected with the inhibition output of the coincidence circuit (ET2) furnishing the first inhibition signal.

2. The elimination circuit for slow mobile echoes for a doppler radar system as claimed in claim 1, characterized in that it comprises a third switch (C2) possessing as many inputs (21 through 24) as there are values of the recurrent frequency, each connected with one output of a summating register (F1 through F4), as well as an output connected with a first input of an addition circuit (CS3), same possessing a second input connected with the input of the envelope detector (DC) and one output, the input of the first switch (C1), then being connected with the output of the said addition circuit (CS3).

3. The elimination circuit for slow mobile echoes for a doppler radar system as claimed in claim 1, characterized in that each summating register (F1 through F4) output is connected with the coincidence circuit (ET) by the intermediary of a threshold circuit (A11 through A14).

4. The elimination circuit for slow mobile echoes for doppler radar as claimed in claim 3, characterized in that it comprises a circuit (S2) for processing the threshold level connected by its inputs with each output of the summating registers (F1 through F4) and furnishing, at an output connected with the threshold circuits (A11 through A14), a threshold signal whose level is determined on the basis of the signal having the maximum level at its outputs.

# FIG_1

EP 0 178 983 B1

# FIG_2

EP 0 178 983 B1

FIG_3

EP 0 178 983 B1

# FIG_4